# EUROPEAN PATENT APPLICATION

(11) **EP 1 221 682 A2**
(43) Date of publication of application: **10.07.2002**
(21) Application number: 01830432.9
(22) Date of filing: 28.06.2001
(51) Int. Cl.: G07F 19/00, G07F 7/10

(54) **Method and memory support for a program for controlling said method for securely conducting commercial and banking transactions in a telecommuniation and computer network**

(30) Priority: 04.01.2001 IT RM010002
(71) Applicant: G M & P S.r.l., 07100 Sassari (IT)
(72) Inventor: Fais, Andrea, 07100 Sassari (IT); Franco, Mario Andrea, 07100 Sassari (IT); Mele, Giuseppe, 07100 Sassari (IT); Mulas, Carlo, 07100 Sassari (IT)
(74) Representative: Lanzoni, Luciano

(57) **Abstract**

A memory support for a programme for controlling a method for securely conducting commercial and banking transactions in a telecommunications and computer network with electronic commerce sites and credit institutions, portable, of the laser-read type, functioning as a payment card to be inserted in a related reader on a user's computer, containing a stored software that includes: a user data certificate in digital format able to allow banking operations, once it is duly activated by means of a secret code of a user holding said memory support as holder of an account with a credit institution, and a programme able to communicate with other programmes residing in computers or servers at said electronic commerce sites and credit institutions interested in said commercial and banking operations through any computer provided with common programmes for connecting to the telecommunications and computer network.

## Description

The present invention relates to a memory support for a programme for controlling a method for securely conducting commercial and banking transactions in a telecommunications and computer network. The invention further relates to the method itself.

Currently, electronic commerce transactions are conducted by means of electronic payment systems that use traditional credit cards. Such system require only the knowledge and online insertion of the secret codes connected to the card. However, if such codes are intercepted, it is possible to conduct fraudulent transactions, i.e. not authorised by the owner of the card. Therefore, physical possession of the card is not a necessary condition for conducting online transactions.

Herein, and hereinafter, the term "commercial and banking transactions" shall mean transactions in a telecommunications and computer network such as the Internet, as well as online trading and/or home banking transactions.

The present invention aims at conducting such transactions with any computer, provided with a laser reader and connected to the network, even outside the user's home, for instance in computers available in a public venue, and at completing the transactions with a degree of security exceeding the one currently existing in online transactions.

In its first aspect, the invention, as it is characterised by the claims that follow, solves the problem of providing a memory support for a programme for controlling a method for securely conducting commercial and banking transactions in a telecommunications and computer network with electronic commerce sites and credit institutions, which, from a general point of view, is characterised in that it is constituted by a portable memory support of the laser reading type, functioning as a payment card to be inserted in a related reader on a user's computer, containing a stored software that includes:
- a user data certificate in digital format able to allow banking transactions, once it is duly activated by means of a secret code of a user holding said memory support as holder of an account with a credit institution; and
- a programme able to communicate with other programmes residing in computers or servers at electronic commerce sites and credit institutions interested in such commercial and banking transactions through any computer provided with common programmes for connecting to the telecommunications and computer network.

Advantageously, said memory support can be constituted by a CD-Card, i.e. a CD-Rom-Card having rectangular shape like a card or credit card or ATM card, or a DVD-Rom-Card, and thus in general any laser read-only memory support, readable by means of appropriate readers applied on nearly all computers. Currently. CD-ROMs in particular are used in the music industry as a support to be inserted in digital readers to play musical numbers, in the computing industry as a software support for computers and game consoles, DVDs are used in the film industry as a support for playing films and multimedia shows, and CD-Cards, because of their size, are employed in the advertising industry as a support for presenting products and/or company skills as well as for personalised business cards.

In a second aspect, the invention provides a method for securely conducting commercial and banking transactions in a telecommunications and computer network, in particular for purchasing goods from an electronic commerce site with payment made by a credit institution with which a user has a contractual relationship, method which, from a general point of view, is characterised in that it is carried out by means of a portable laser-read memory support, functioning as a payment card to be inserted in a related reader on a user's computer, containing a stored software that includes:
- a user data certificate in digital format able to allow banking transactions, once it is duly activated by means of a secret code of a user holding said memory support as holder of a "dedicated" account with a credit institution; and
- a programme able to communicate with other programmes residing in computers or servers at electronic commerce sites and credit institutions interested in such commercial and banking transactions through any computer provided with common programmes for connecting to the telecommunications and computer network;
said method comprising the following steps:
- insertion of said memory support into the related reader of the user's computer,
- insertion of a secret user code associated to the memory support,
- selection, by the user, of a product or service offered by an electronic commerce site participating in said payment system;
- reception of a message in the form of a request for payment by the commercial site and verification thereof;
- integration of the user's data, including the user data certificate in digital format, and transmission thereof to the bank server to authorise the fund transfer to the commercial site;
- reading, by the server of the credit institution, of the user data certificate in digital format contained on the memory support, and request that the user type a second transaction authorisation code;
- cross check between the user data certificate associated to the memory support and said second code, aimed at identifying the user and subsequently authorising the transaction on the "dedicated" account;
- transmission of a message to the server of the commercial site for communicating the outcome of the transaction;
- activation, in the company owning the commercial site, of the order fulfilment procedure, and transmission of a confirmation message to the user;
- communication of residual credit to the user by the credit institution.

In practice, a user underwrites a bank account contract with a credit institution that accepts the system of payment orders with the memory support in the form of CD-Card as indicated above, which contains the digital certificate of the user set up at the origin by the credit institution and a secret code necessary for activating the card, and a programme for communicating with other servers of credit institutions and commercial sites online. The bank account can be "dedicated", specifically to this payment order system, for instance having a limited amount, locked in or replenished from time to time from another account, and so on.

The user who intends to conduct online transactions, such as purchases in sites participating in the payment system, will have to insert the CD-Card into the related reader of the computer in use.

At this point the user will have to enter a secret card holder user code, which activates and enables his/her own software to communicate with the one installed in the server of the credit institution and with those of electronic commerce sites.

In order to conduct online trading and home banking transactions, the procedures are similar to those described, upon activation of an appropriate bank account.

At the moment of an online purchase at electronic commerce sites, the server of the commercial site will receive the order to start collecting the information about the transaction and will send it to the software contained on the memory support, which will display them in the computer utilised by the user.

The user may then confirm or cancel the purchase by clicking on the appropriate buttons. By confirming the transaction, the support is authorised to send the information previously received from the site, together with the digital code contained within it, to the server of the credit institution where the "dedicated" bank account has been opened.

The server of the credit institution receives the communication from the memory support, reads the user data certificate in digital format and requests the user to type a second code for authorising the transaction. This second secret code, for instance of the common alphanumeric type, is provided to the user by the credit institution at the time the contractual relationship is defined. The credit institution, then cross checks the received data, identifying the user, and collects the information pertaining to the online transaction.

The transmission of said data by the memory support represents for the credit institution an authorisation to proceed with the funds transfer in favour of the electronic commerce site where the user decided to make the purchase.

The credit institution compares the data pertaining to the amount of the expense of the transaction with the one pertaining to the residual credit available in the "dedicated" account associated with the physical support used.

The credit institution sends the information of the successful or unsuccessful outcome of the transaction directly to the commercial site, which, in turn, will have to communicate it, by means of a screen display, to the user at the time such information is displayed in the computer screen. With this last step, the entire purchase transaction can be considered complete.

From the description provided above, substantial differences emerge relative to traditional payment methods using normal credit cards. The latter are based on the insertion only of the codes necessary to complete the transactions, whilst the payment method described allows considerably greater security thanks to the interconnection of a direct recognition by means of said second code, and of an indirect one, by means of the user data certificate contained in the memory support, activated by means of its own secret user code, able to allow only the legitimate user to complete the transaction.

The greatest innovation consists in the indispensable combined possession of the memory support and of the related secret user code for its activation, convenient to carry and low-cost, for completing the online transaction. Possession of the memory support allows only those who know its secret code and a second authorisation code for the credit institution, i.e. its holder, to complete the purchase.

Further features and advantages of the invention shall become more readily apparent from the detailed description that follows of a preferred embodiment, illustrated purely by way of non limiting example in the accompanying drawings in which:
- Figure 1 shows a flowchart of the initialisation phase of the payment operation at the user side in a method according to the present invention;
- Figure 2 shows a flowchart of the payment transaction with the user's bank in the method according to the present invention;
- Figure 3 shows a flowchart of the payment transaction with the electronic commerce site in the same method.

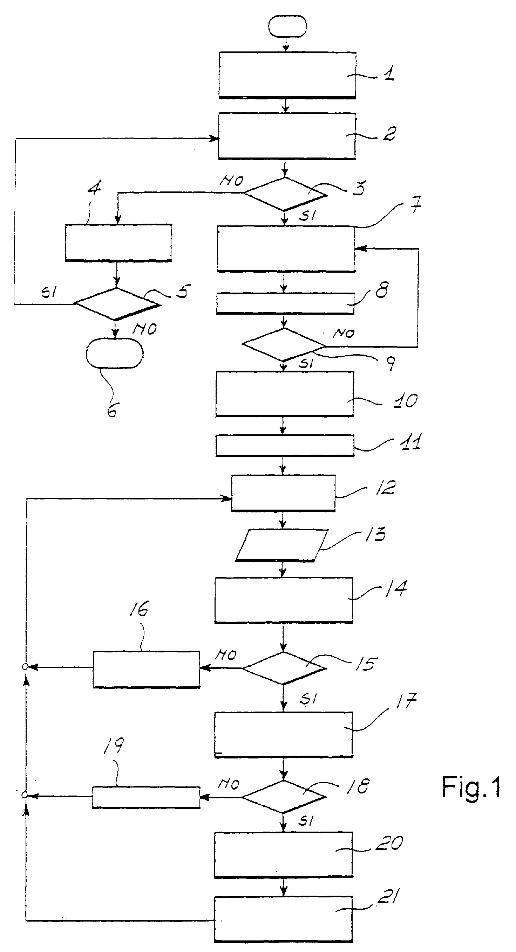

With reference to Figure 1, the steps relating to the initialisation of the programme and the payment operation in the method at the user side are shown synthetically. In block 1, the user inserts the CD-Card into the CD reader of his/her computer. The user software contained therein is executed automatically with no need for installation because it is loaded from the CD-Card into the computer memory. It leaves not traces of itself and of any transactions conducted in the course of the various online purchase sessions.

The programme moves to block 2 where the user software verifies that the computer is actually connected to the network and has a valid ID code. In the subsequent decision step 3 the programme asks whether the computer is connected to the network or not. If the reply is no, the programme moves to block 4 in which the software alerts the user that CD-Card operability can only be activated if there is a connection to the network. The successive decision block 5 asks the user if he/she wants to try again. If the reply is negative, the procedure moves on to the stop block 6, whilst if it is affirmative block 5 returns it to block 2.

If the computer is regularly connected in the network, in block 7 the user is asked to enter a secret user code identifying him/her as the holder authorised to activate the CD-Card. In block 8 the user enters the code. In the decision block 9. in case of negative replay the procedure returns to block 7, whilst in case of affirmative reply the user software initialises a series of operative data and opens a window on the video, which window will always remain visible, to show the status of all payment transactions relating to the current purchase session (block 10). At this point the user software is operative and from now on the user is enabled to carry out online payments by means of the CD-Card (block 11). Then the user, connected to a commercial site, selects one or more products or services and chooses to pay by means of the CD-Card clicking on an appropriate "flag". As stated, the user software is active and, as shown in block 12, it awaits a payment request by a commercial site enabled to use the CD-Card system. Block 13 indicates that a message has arrived. At this point the user software analyses the message to determine whether it comes from an authorised site and whether it contains all parameters necessary to order the transaction, such as an identifying code for the order relating to the product or service, the bank co-ordinates of the selling company owning the site, the date, the time, the amount, the currency, etc.

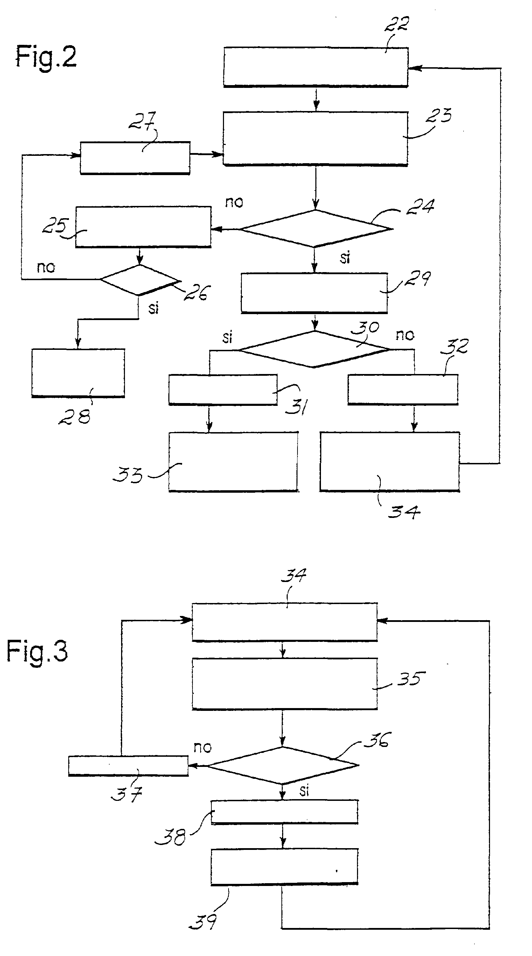

From the decision block 15, in case of negative reply, the procedure moves to block 16 in which the software rejects the message and informs the user of the type of error encountered. From block 16 the procedure returns to block 12. In case of affirmative reply, from block 15 the procedure moves to block 17 in which the user software presents on the screen a summary report of the requested payment transaction, complete with all data. The user is asked to provide confirmation in order to authorised his/her credit institution and carry out the transaction. From block 17 the procedure moves to the decision block 18, in which the user is asked whether he/she authorises the transaction or not. In case of negative reply, the procedure moves to block 19 in which the transaction is aborted and then to block 12 again. In case of affirmative reply, instead, the user software completes the data received from the commercial site with its own, including the digital user certificate as authorised holder of the CD-Card, thereby ordering the transaction (block 20). The procedure then moves to block 21, in which after a few moments the user receives indication on the video of the outcome of the transaction. Simultaneously, a confirmation email can be received from the electronic commerce site. When this transaction is complete, the procedure returns to block 12. With reference to Figure 2, the payment transaction with the user's credit institution is shown schematically. Block 22 shows the step in which the bank server awaits a message with the funds transfer request coming from the user. In block 23 the bank server receives this requested complete with all data in favour of the company owning the commercial site at which the user has made the purchase. From the subsequent block 24, in which the user is asked to type the second authorisation code and the cross check with the user data certificate is performed, if is identified, the procedure moves on to block 29, otherwise if the result is negative the procedure moves to block 25 in which the check is conducted to determine whether the maximum tolerated number of errors has been exceeded. In the successive decision block 26 the procedure asks whether this maximum number has been exceeded. If not, the procedure moves on to block 27 in which the message is ignored and thence back to block 23. If the reply is affirmative, from block 26 the procedure moves to block 28 in which the user's CD-Card is disabled and the user is non longer able to carry out transactions.

In case of affirmative response from block 24 the procedure moves to block 29 in which the operative software on the server of the user's bank, which oversees all automatic operations required to complete CD-Card payment transactions, checks the availability of the amount on the user's "dedicated" credit account. From block 29, the procedure moves on to the decision block 30, in which the question is asked whether the amount is available or not. If the reply is affirmative, the funds transfer is made (block 31).

The procedure then moves on to block 33 which sends a message to the server of the e-commerce site that is the recipient of the transaction, notifying its successful outcome. The message contains in particular the identifying code of the order that user has placed with the commercial site. If the reply at block 30 is negative, the transaction is aborted (block 32). In this case the procedure moves on to block 34 in which a message is sent to the server of the commercial site that is the recipient of the transaction, to notify its unsuccessful outcome.

With reference to Figure 3, the steps of the transaction operation at the commercial site are described. In block 35 it is indicated that the site is awaiting an authenticated message from one of the banks participating in the CD-Card system. In the successive block 36 the message is received by the e-commerce site and the authenticity and completeness of the data contained therein are checked. In addition to the data of the funds transfer, the order identification code, the address of the computer and the user's email address must also be present. From block 36, the procedure moves to the decision block 37 in which the decision is made as to whether the message is correct and complete or not. If the reply is negative, the procedure moves to block 38, in which the message is ignored, and thence back to block 35. In case of affirmative reply from the block 37 the procedure moves to block 39 in which the internal procedure for fulfilling the user's order are activated. From block 39, the procedure lastly moves to block 40 in which the user is sent a direct message confirming the completed transaction and a receipt email message with all the data of the order and of the payment. From block 40, the procedure returns to block 35 for a possible subsequent purchase transaction.

The advantages provided by the invention are readily understood, in particular the high degree of security afforded to each transaction, deriving from the fact that possession of the memory support, by itself, does not allow unauthorised holders to operate fraudulently.

Naturally, the invention thus conceived can be subject to numerous modifications and variations, without thereby departing from the scope of the inventive concept that characterises it.

## Claims

1. A memory support for a programme for controlling a method for securely conducting commercial and banking transactions in a telecommunications and computer network with electronic commerce sites and credit institutions, **characterised in that** it is constituted by a portable memory support of the laser-read type, functioning as a payment card to be inserted in a related reader on a user's computer, containing a stored software that includes:
- a user data certificate in digital format able to allow banking transactions, once it is duly activated by means of a secret code of a user holding said memory support as holder of an account with a credit institution; and
- a programme able to communicate with other programmes residing in computers or servers at electronic commerce sites and credit institutions interested in such commercial and banking transactions through any computer provided with common programmes for connecting to the telecommunications and computer network.

2. A support as claimed in claim 1, **characterised in that** said user data certificate is constituted by a file containing useful identifying data set up by the credit institution.

3. A support as claimed in claim 1, **characterised in that** said programme, following an initialisation phase, comprises the following steps:
- waiting for a message containing a payment request by an enabled commercial site to the memory support system;
- analysing a message to determine whether it comes from an authorised site and whether it contains all parameters necessary to order the transaction;
- in case of affirmative reply, presenting on the screen a report on the requested payment transaction;
- requesting confirmation from the user for authorising the credit institution to conduct the transaction;
- in case of affirmative reply, completing the data received from the commercial site with its own, including the user data certificate in digital format;
- indication of the outcome of the transaction on video.

4. A support as claimed in claim 1, **characterised in that** said memory support further comprises an animated presentation of the companies that offer goods and services.

5. A support as claimed in claim 1, **characterised in that** said memory support further comprises an explicative demonstration illustrating the various steps for the correct utilisation of the memory support.

6. A support as claimed in claim 1, **characterised in that** said memory support further comprises advertising content.

7. A support as claimed in claim 1, **characterised in that** it is constituted by a so-called CD-Card.

8. A support as claimed in claim 1, **characterised in that** it is constituted by a CD-ROM-Card.

9. A support as claimed in claim 1, **characterised in that** it is constituted by a DVD-ROM-Card.

10. A method for securely conducting commercial and banking transactions in a telecommunications and computer network, in particular the purchase of goods from an electronic commerce site with payment conducted by a credit institution with which a user has a contractual relationship, **characterised in that** it is carried out by means of a portable laser-read memory support, functioning as a payment card to be inserted in a related reader on a user's computer, containing a stored software that includes:
- a user data certificate in digital format able to allow banking transactions, once it is duly activated by means of a secret code of a user holding said memory support as holder of a "dedicated" account with a credit institution; and
- a programme able to communicate with other programmes residing in computers or servers at electronic commerce sites and credit institutions interested in such commercial and banking transactions through any computer provided with common programmes for connecting to the telecommunications and computer network;
said method comprising the following steps:
- insertion of said memory support into the related reader of the user's computer,
- insertion of a secret user code associated to the memory support,
- selection, by the user, of a product or service offered by an electronic commerce site participating in said payment system;
- reception of a message in the form of a request for payment by the commercial site and verification thereof;
- integration of the user's data, including the user data certificate in digital format, and transmission thereof to the bank server to authorise the fund transfer to the commercial site;
- reading, by the server of the credit institution, of the user data certificate in digital format contained on the memory support, and request that the user type a second transaction authorisation code;
- cross check between the user data certificate associated to the memory support and said second code, aimed at identifying the user and subsequently authorising the transaction on the "dedicated" account;
- transmission of a message to the server of the commercial site for communicating the outcome of the transaction;
- activation, in the company owning the commercial site, of the order fulfilment procedure, and transmission of a confirmation message to the user;
- communication of residual credit to the user by the credit institution.
